# EUROPEAN PATENT APPLICATION

(11) **EP 4 835 992 A1**
(43) Date of publication of application: **04.11.2026**
(21) Application number: 24910103.1
(22) Date of filing: 30.09.2024
(51) Int. Cl.: H01M 4/36

(54) **POROUS CARBON AND PREPARATION METHOD THEREFOR, AND NEGATIVE ELECTRODE ACTIVE MATERIAL AND USE THEREOF**

(30) Priority: 29.12.2023 CN 202311865602
(71) Applicant: BYD Company Limited, Shenzhen, Guangdong 518118 (CN)
(72) Inventor: HE, Kefeng, Shenzhen, Guangdong 518118 (CN); WANG, Liangjun, Shenzhen, Guangdong 518118 (CN); PEI, Dazhao, Shenzhen, Guangdong 518118 (CN)
(74) Representative: Mathys & Squire
(86) International application number: PCT/CN2024/122618
(87) International publication number: WO 2025/139161

(57) **Abstract**

A porous carbon and a preparation method thereof, and a negative electrode active material and an application thereof are provided. A pore volume of the porous carbon is 0.6 cm³/g to 1.2 cm³/g. Based on the total pore volume of the porous carbon, a volume proportion of pores with a pore size smaller than 2 nm is 70% to 95%, a volume proportion of pores with a pore size greater than or equal to 2 nm and smaller than or equal to 10 nm is 2% to 12%, a volume proportion of pores with a pore size greater than 10 nm and smaller than or equal to 50 nm is 1% to 18%, and a volume proportion of pores with a pore size greater than 50 nm is 0% to 23%.

## Description

This application claims priority to Chinese Patent Application No. 202311865602.9, filed with the China National Intellectual Property Administration on December 29, 2023 and entitled "POROUS CARBON AND PREPARATION METHOD THEREOF, AND NEGATIVE ELECTRODE ACTIVE MATERIAL AND APPLICATION THEREOF", which is incorporated herein by reference in its entirety.

### TECHNICAL FIELD

The present disclosure relates to the field of battery technologies, specifically to a porous carbon and a preparation method thereof, and a negative electrode active material and an application thereof.

### BACKGROUND

To meet market demands for high-energy-density secondary batteries, the industry has attempted to use high-performance negative electrode active materials, such as silicon materials, to replace commonly used graphite materials. However, the volume change rate of the silicon materials during battery charge and discharge cycles can reach 300%. After multiple cycles, this can lead to adverse consequences such as silicon material pulverization, resulting in a reduced battery capacity. To address the foregoing technical challenges, the industry has opted to use nanoscale and amorphize the silicon materials. In this process, the silicon materials are deposited in pores of porous materials through pyrolysis of silane gas, achieving both nano-scaling and amorphization of the silicon materials. Confinement effect of the porous materials helps suppress volume changes in the silicon materials during cycling.

However, silicon-carbon negative electrode active materials prepared by using the above method tend to have silicon deposited on a surface of the porous materials, leading to increased side reactions, reduced initial coulombic efficiency, significant lithiation expansion, low conductivity, and severe gas generation on the material surface during a negative electrode slurry preparation process. Additionally, uneven distribution of silicon materials in the prepared silicon-carbon negative electrode active materials causes increased side reactions in the silicon-carbon negative electrode active materials during charge and discharge cycles, and uneven internal stress distribution impairs structural stability of the materials. After silicon deposition, the silicon-carbon negative electrode active materials exhibit poor compressibility during electrode rolling processes, with low material compaction. When particles are subjected to force, uneven stress distribution in the porous materials leads to local stress concentration, particle fragmentation, or microcrack formation. During the charge and discharge cycles, high reactivity at the fragmented or microcracked regions further increases the side reactions of the silicon-carbon negative electrode active materials.

### SUMMARY

In view of this, examples of the present disclosure provide a porous carbon and preparation method thereof, and a negative electrode active material and an application thereof. The porous carbon has a novel structural design with abundant pores and an appropriate pore size distribution. The porous carbon may be used to provide a negative electrode active material with high initial coulombic efficiency, high capacity, low expansion, high conductivity, low gas production rate during negative electrode slurry preparation, high material compaction, and good long-cycle structural stability.

The present disclosure provides a porous carbon, wherein a total pore volume of the porous carbon is 0.6 cm³/g to 1.2 cm³/g; and based on the total pore volume of the porous carbon, a volume proportion of pores with a pore size smaller than 2 nm is 70% to 95%, a volume proportion of pores with a pore size greater than or equal to 2 nm and smaller than or equal to 10 nm is 2% to 12%, a volume proportion of pores with a pore size greater than 10 nm and smaller than or equal to 50 nm is 1% to 18%, and a volume proportion of pores with a pore size greater than 50 nm is 0% to 23%.

In a possible example, a volume proportion of pores with a pore size greater than 10 nm and smaller than or equal to 30 nm is 2% to 10%, and a volume proportion of pores with a pore size greater than 30 nm and smaller than or equal to 50 nm is 1% to 8%.

In a possible example, based on the total pore volume of the porous carbon, the volume proportion of the pores with the pore size greater than 50 nm is 0% to 4%.

In a possible example, a specific surface area of the porous carbon is 1400 m²/g to 2400 m²/g.

In a possible example, an average pore size of the porous carbon is 0.8 nm to 2.6 nm.

In a possible example, the porous carbon includes amorphous carbon.

The porous carbon has a large total pore volume, providing ample space to accommodate active nanoparticles. Additionally, the porous material exhibits an appropriate pore size distribution, with a high volume proportion of the pores with the pore size smaller than 2 nm and a low proportion of pores with a pore size larger than 30 nm. This results in a uniform and gradient distribution of pores within the porous carbon, facilitating uniform deposition of the active nanoparticles within a pore structure of the porous carbon. In addition, this reduces risk of deposition of the active nanoparticles on a surface of porous carbon particles, minimizing side reactions on the material surface and improving initial coulombic efficiency of the material. This further enhances powder conductivity of the material, reduces gas generation during slurry preparation processes, and contributes to an increase in compaction density of the material. Moreover, the porous carbon with the above structure exhibits excellent confinement effect on the active nanoparticles, effectively suppressing volume expansion of the active nanoparticles during cycling and reducing uneven internal stress distribution caused by uneven distribution of the active nanoparticles. Therefore, the porous material may be used to provide a negative electrode active material with high capacity and good structural stability over long cycles.

A second aspect of examples of the present disclosure provides a preparation method of a porous carbon, including:

performing activation treatment on a carbon matrix to obtain the porous carbon provided in the first aspect of the examples of the present disclosure.

In a possible example, the activation treatment includes alkali activation treatment, steam activation treatment, and carbon dioxide activation treatment that are performed sequentially; or the activation treatment includes alkali activation treatment and mixed gas activation treatment, wherein the mixed gas includes steam and carbon dioxide.

In a possible example, the alkali activation treatment, the steam activation treatment, and the carbon dioxide activation treatment that are performed sequentially include:
mixing the carbon matrix with an alkali, reacting at 650°C to 850°C for 2 h to 4 h, and washing to obtain a first material;
reacting the first material in a steam environment at 500°C to 800°C for 2 h to 4 h to obtain a second material; and
reacting the second material in a carbon dioxide atmosphere at 800°C to 1200°C for 2 h to 4 h to obtain the porous carbon.

In a possible example, the carbon matrix is obtained by carbonizing one or more of biomass, resin, and coal char, wherein a carbonization temperature is 500°C to 1500°C, and carbonization duration is 2 h to 8 h.

The above preparation method has simple steps, high process controllability, and high production efficiency, allowing for large-scale industrial production.

A third aspect of examples of the present disclosure provides a negative electrode active material, including carbon-containing composite particles, wherein the carbon-containing composite particles include the porous carbon provided in the first aspect of the present disclosure and nanoparticles located within the porous carbon, and a material of the nanoparticles includes at least one of silicon, germanium, and tin.

In a possible example, the carbon-containing composite particles are silicon-carbon particles, the material of the nanoparticles includes elemental silicon, a passivation region is formed in a thickness region extending 5 nm to 20 nm from a surface layer to a center of the silicon-carbon particles, and the passivation region includes silicon dioxide.

In a possible example, the negative electrode active material further includes a coating layer disposed on a surface of the carbon-containing composite particles, and a material of the coating layer includes conductive carbon and/or a fast ion conductor material; and preferably, a thickness of the coating layer is 10 nm to 50 nm.

In a possible example, the carbon-containing composite particles are silicon-carbon particles, the material of the nanoparticles includes silicon, and a mass proportion of silicon in the silicon-carbon particles is 40 w.t.% to 50 w.t.%.

In a possible example, a mass proportion of carbon in the carbon-containing composite particles is 50 w.t.% to 60 w.t.%.

Due to use of the porous carbon provided in the first aspect of the present disclosure as a substrate, the nanoparticles are uniformly distributed in the carbon-containing composite particles, and particle size distribution of the nanoparticles is appropriate, with no enrichment on the surface of the carbon-containing composite particles. Therefore, the problem of uneven stress distribution within the carbon-containing composite particles caused by differences in expansion volumes of the nanoparticles during charge and discharge cycles may be effectively reduced, thereby improving structural stability of the negative electrode active material during the charge and discharge cycles. Additionally, a high compaction density may be achieved while ensuring integrity of the carbon-containing composite particles. In addition, based on high capacity of the nanoparticles and particular confinement effect of the porous carbon on the nanoparticles, the foregoing negative electrode active material may be used as the negative electrode active material with high capacity, low expansion rate, and good structural stability over long cycles. In addition, there is no enrichment of the nanoparticles on a surface of particles of the foregoing negative electrode active material, and the material generates less gas during slurry preparation processes, so that there are fewer side reactions on the surface of the particles, delivering high initial coulombic efficiency and high conductivity of the material.

A fourth aspect of examples of the present disclosure provides a preparation method of a negative electrode active material, including: forming carbon-containing composite particles by depositing nanoparticles in the porous carbon provided in the first aspect of the examples of the present disclosure, to obtain the negative electrode active material; and the material of the nanoparticles includes at least one of silicon, germanium, and tin.

In a possible example, the carbon-containing composite particles are silicon-carbon particles, the material of the nanoparticles includes silicon, and depositing the nanoparticles in the porous carbon includes: placing the porous carbon in a reaction chamber, introducing a silicon source, and depositing for 2 h to 6 h at a temperature of 400°C to 600°C, to obtain the negative electrode active material.

In a possible example, the silicon source includes silane, and the nanoparticles obtained by deposition include elemental silicon.

In a possible example, the preparation method further includes: performing oxidation passivation treatment on the porous carbon deposited with the nanoparticles.

In a possible example, the oxidation passivation treatment includes: exposing the porous carbon deposited with the nanoparticles in a gas with an oxygen volume content of 2% to 4%, and performing passivation treatment for 2 h to 4 h at a temperature of 200°C to 500°C.

The above preparation method has high process reliability and high production efficiency, and is suitable for large-scale industrial production.

A fifth aspect of this application provides an electrochemical apparatus, including a negative electrode. The negative electrode includes the negative electrode active material provided in the third aspect of this application, or the negative electrode active material prepared by the preparation method provided in the fourth aspect of this application. Due to inclusion of the negative electrode provided in the example of this application, the electrochemical apparatus may achieve high capacity, excellent cycling performance, and low expansion rate.

A sixth aspect of this application provides an electrical device, including the electrochemical apparatus provided in the fifth aspect of this application. The electrical device has a promising market prospect due to the electrochemical apparatus provided in the example of this application.

### BRIEF DESCRIPTION OF DRAWINGS

FIG. 1 shows an adsorption-desorption isotherm curve of a porous carbon according to Example 1 of the present disclosure;
FIG. 2 is a diagram of a structure of carbon-containing composite particles provided in an example of the present disclosure;
FIG. 3 is a diagram of a structure of an electrochemical apparatus provided in an example of the present disclosure; and
FIG. 4 is a block diagram of a structure of an electrical device provided in an example of the present disclosure.

### DESCRIPTION OF EMBODIMENTS

An example of the present disclosure provides a porous carbon, wherein a total pore volume of the porous carbon is 0.6 cm³/g to 1.2 cm³/g.

Based on the total pore volume of the porous carbon, a volume proportion of pores with a pore size smaller than 2 nm is 70% to 95%, a volume proportion of pores with a pore size greater than or equal to 2 nm and smaller than or equal to 10 nm is 2% to 12%, a volume proportion of pores with a pore size greater than 10 nm and smaller than or equal to 50 nm is 1% to 18%, and a volume proportion of pores with a pore size greater than 50 nm is 0% to 23%.

The inventor discovered through research that properties of a silicon-carbon negative electrode active material largely depend on a porous material itself. In conventional technologies, the poor design of a pore structure of the porous material leads to poor electrochemical performance of the silicon-carbon negative electrode active material. The porous carbon in the present disclosure has a large total pore volume, providing ample space to accommodate active material nanoparticles (for example, silicon-containing particles). Additionally, the porous material exhibits an appropriate pore size distribution, with a high volume proportion of the pores with the pore size smaller than 2 nm and a low proportion of pores with a pore size larger than 50 nm. This results in a uniform distribution of pores within the porous carbon, facilitating uniform deposition of the active material nanoparticles. In addition, this reduces risk of deposition of the active material nanoparticles on a surface of porous carbon particles, reduces pore dimension within the particles after the active material nanoparticles are deposited, reduces gas generation by the finally obtained negative electrode active material during a slurry preparation processes, and improves a compaction density of the final negative electrode active material without compromising particle integrity. Moreover, the porous carbon exhibits excellent confinement effect on the active material nanoparticles, effectively suppressing volume expansion of the active material nanoparticles during cycling and reducing uneven internal stress distribution caused by uneven distribution of the active material nanoparticles. This reduces material fragmentation during charge and discharge cycles due to uneven internal stress distribution of the negative electrode active material. Therefore, the porous material may be used to provide the negative electrode active material with high capacity and good structural stability over long cycles.

In this example of the present disclosure, a pore size distribution and the total pore volume of the porous carbon are measured by a gas adsorption-desorption method. Specifically, the porous carbon is placed in a gas adsorption-desorption tester. During a testing process, a degassing time is maintained at greater than or equal to 120 min and a degassing temperature at greater than or equal to 200°C to obtain an adsorption-desorption curve of the porous carbon. Then, data processing is performed to obtain parameters such as the pore size distribution and the total pore volume of the porous carbon.

For example, the volume proportion of the pores with the pore size smaller than 2 nm may be, but is not limited to, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, or the like. If the volume proportion of the pores with the pore size smaller than 2 nm is excessively small, a proportion of mesopores (pores with a pore size of 2 nm to 50 nm) and/or a proportion of macropores (pores with a pore size greater than 50 nm) may increase, resulting in a wider pore size distribution within the porous carbon. In this case, subsequent deposition of the active material nanoparticles (for example, a silicon-containing material) results in a wider particle size distribution of the active material nanoparticles in the resulting carbon-containing composite particles. During the charge and discharge cycles, severe stress inhomogeneity still occurs, failing to effectively improve structural stability of the negative electrode active material, and ultimately resulting in poor battery cycling performance. In addition, especially during silane deposition, increased proportions of the mesopores and the macropores lead to multilayer adsorption of silicon dominating a silane deposition process, causing a material surface prone to silicon enrichment. The silicon enrichment issue results in low initial coulombic efficiency, severe gas generation, and reduced conductivity of the material. Additionally, with the increased proportions of the mesopores and the macropores, during a rolling process of a material to be prepared into a negative electrode sheet, under uniformly applied external stress, walls of large-sized pores experience stress concentration. This causes large strain in the large-sized pores, generating cracks and making the material prone to crushing under compression.

For example, the volume proportion of the pores with the pore size greater than or equal to 2 nm and smaller than or equal to 10 nm may be, but is not limited to, 2%, 3%, 4%, 5%, 6%, 7%, 8%, 9%, 10%, 11%, 12%, or the like. If the proportion of the pores with the foregoing pore size is excessively large, it may squeeze a volume proportion of micropores (pores with a pore size less than 2 nm), resulting in a lower pore size concentration of the porous carbon. In addition, in examples of the present disclosure, the total pore volume of the porous carbon is fixed. An increased proportion of pores with a large pore size may lead to a decrease in a quantity of pores in the porous carbon. This is not conducive to subsequent uniform deposition and distribution of the active material nanoparticles in the porous carbon, resulting in a decrease in structural uniformity of the final negative electrode active material.

For example, the volume proportion of the pores with the pore size greater than 10 nm and smaller than or equal to 50 nm may be, but is not limited to, 2%, 3%, 4%, 5%, 6%, 7%, 8%, 9%, 10%, 11%, 12%, 13%, 14%, 15%, 16%, 17%, 18%, or the like. If the volume proportion of the pores with the foregoing pore size is excessively large, it may lead to a wider pore size distribution of the porous carbon, and reduce uniformity of particle size and distribution of the active material nanoparticles in the final negative electrode active material, affecting structural stability of the negative electrode active material. In some embodiments of the present disclosure, a volume proportion of pores with a pore size greater than 10 nm and smaller than or equal to 30 nm is 2% to 10%, and a volume proportion of pores with a pore size greater than 30 nm and smaller than or equal to 50 nm is 1% to 8%. This facilitates better control of a narrower pore size distribution in the porous carbon, enhances homogeneity of the pore size distribution within the porous carbon, and may be used to provide a negative electrode active material with improved electrochemical performance. For example, the volume proportion of the pores with the pore size greater than 10 nm and smaller than or equal to 30 nm may be, but is not limited to, 2%, 3%, 4%, 5%, 6%, 7%, 8%, 9%, 10%, and the volume proportion of the pores with the pore size greater than 30 nm and smaller than or equal to 50 nm may be, but is not limited to, 1%, 2%, 3%, 4%, 5%, 6%, 7%, 8%, or the like.

For example, the volume proportion of the pores with the pore size greater than 50 nm may be 0%, 1%, 2%, 3%, 4%, 5%, 6%, 8%, 10%, 12%, 15%, 18%, 20%, 21%, 22%, 23%, or the like. The macropores (pores with a pore size greater than 50 nm) exhibit a low filling rate during deposition of the silicon-containing material. After deposition of the active material nanoparticles, relatively large pores remain in the resulting negative electrode active material. These pores become stress concentration points during a compaction process of the negative electrode active material, leading to cracking of the negative electrode active material. To avoid the above situation, conventional technologies adopt an approach of reducing a compaction density of the negative electrode active material, which is not conducive to its application. In some embodiments of the present disclosure, based on the total pore volume of the porous carbon, the volume proportion of the pores with a pore size greater than 50 nm is smaller than or equal to 4%. In some specific examples, the volume proportion of the pores with the pore size greater than 50 nm is 0, that is, the porous carbon does not include macropores. This may further improve pore size distribution concentration of the porous carbon, and further reduce a risk of macropores existing in the finally obtained negative electrode active material, improving the compaction density of the negative electrode active material while ensuring particle integrity of the negative electrode active material.

In some specific examples, the total pore volume of the porous carbon is 0.6 cm³/g to 1.2 cm³/g. Based on the total pore volume of the porous carbon, the volume proportion of the pores with the pore size smaller than 2 nm is 70% to 95%, the volume proportion of the pores with the pore size greater than or equal to 2 nm and smaller than or equal to 10 nm is 2% to 12%, the volume proportion of the pores with the pore size greater than 10 nm and smaller than or equal to 30 nm is 2% to 10%, the volume proportion of the pores with the pore size greater than 30 nm and smaller than or equal to 50 nm is 1% to 8%, and the volume proportion of the pores with the pore size greater than 50 nm is 0 to 4%. In this way, a pore distribution of the porous carbon is further optimized, helping improve performance of the final negative electrode active material.

For example, the pore volume of the porous carbon may be, but is not limited to, 0.6 cm³/g, 0.7 cm³/g, 0.8 cm³/g, 1.0 cm³/g, and 1.2 cm³/g. If the pore volume of the porous carbon is excessively small, a sufficient amount of the active material nanoparticles may not be accommodated. This results in insufficient capacity of the final negative electrode active material, failing to meet market demand for battery energy density. This may further cause the active material nanoparticles to deposit readily on a surface of a porous carbon material. If the pore volume of the porous carbon is excessively large, confinement effect of the porous carbon on the active material nanoparticles may be weakened, affecting thermodynamic stability of the negative electrode active material. In some embodiments of the present disclosure, an average pore size of the porous carbon is 0.8 nm to 2.6 nm. For example, the average pore size of the porous carbon may be, but is not limited to, 0.8 nm, 1.2 nm, 1.6 nm, 2.0 nm, 2.2 nm, 2.4 nm, and 2.6 nm. An example in which the porous carbon is used for silane deposition is used for illustration. The average pore size of the porous carbon is controlled within the above range. This allows for a more appropriate proportion of the micropores, facilitating diffusion of silane within the porous carbon. In addition, the proportions of the mesopores and the macropores in the porous carbon may be controlled within an appropriate range, improving deposition efficiency of silane in the porous carbon, and further reducing risk of silicon enrichment due to silicon deposition on the surface of the porous carbon particles.

In some embodiments of the present disclosure, the porous carbon is amorphous carbon. In some embodiments of the present disclosure, the porous carbon may include some heteroatoms, such as nitrogen atoms, oxygen atoms, and the like, and carbon content of the porous carbon is 50 wt.% to 60 wt.%.

In some embodiments of the present disclosure, a specific surface area of the porous carbon is 1400 m²/g to 2400 m²/g. A suitable specific surface area is beneficial for subsequent deposition of the active material nanoparticles, and the finally obtained negative electrode active material may correspondingly have a suitable specific surface area, facilitating intercalation and deintercalation of active ions and significantly reducing risk of side reactions between the negative electrode active material and other substances in subsequent applications, for example, side reactions between the negative electrode active material and solvent during a preparation process of negative electrode slurry, and side reactions between the negative electrode active material and electrolyte in a battery. For example, the specific surface area of the porous carbon may be, but is not limited to, 1400 m²/g, 1500 m²/g, 1600 m²/g, 1700 m²/g, 1800 m²/g, 1900 m²/g, 2000 m²/g, 2100 m²/g, 2200 m²/g, 2300 m²/g, 2400 m²/g, or the like.

In some embodiments of the present disclosure, Dv50 of the porous carbon is 3 µm to 12 µm. The Dv50 of the porous carbon is controlled within the foregoing range. This helps control the particle size of the final negative electrode active material within a suitable range, allowing for a more suitable deintercalation/intercalation pathway for the active ions in the negative electrode active material particles. This may further achieve a higher compaction density, facilitating acquisition of batteries with high energy density. For example, the Dv50 of the porous carbon may be, but is not limited to, 3.0 µm, 3.5 µm, 4.0 µm, 4.5 µm, 5.0 µm, 5.5 µm, 6.0 µm, 6.5 µm, 7.0 µm, 7.5 µm, 8.0 µm, 8.5 µm, 9.0 µm, 9.5 µm, 10.0 µm, 10.5 µm, 11.0 µm, 11.5 µm, 12.0 µm, or the like. In this example of the present disclosure, a laser particle size analyzer may be used to test the Dv50 of the porous carbon.

An example of the present disclosure further provides a preparation method of a porous carbon. The preparation method may be used to prepare the foregoing porous carbon, and includes:
performing activation treatment on a carbon matrix to obtain the porous carbon provided in this example of the present disclosure, wherein a total pore volume of the porous carbon is 0.6 cm³/g to 1.2 cm³/g; and based on the total pore volume of the porous carbon, a volume proportion of pores with a pore size smaller than 2 nm is 70% to 95%, a volume proportion of pores with a pore size greater than or equal to 2 nm and smaller than or equal to 10 nm is 2% to 12%, a volume proportion of pores with a pore size greater than 10 nm and smaller than or equal to 50 nm is 1% to 18%, and a volume proportion of pores with a pore size greater than 50 nm is 0% to 23%.

The above preparation method has simple steps, high process controllability, and high production efficiency, allowing for large-scale industrial production.

In some embodiments of the present disclosure, the activation treatment includes alkali activation treatment, steam activation treatment, and carbon dioxide activation treatment that are performed sequentially. The alkali activation treatment may effectively increase a specific surface area of the carbon matrix and further help remove impurities (for example, oxides and the like) from the carbon matrix. The steam activation treatment facilitates formation of mesopores in the carbon matrix, while the final carbon dioxide activation treatment may prepare a microporous structure with abundant pores.

In some embodiments of the present disclosure, the foregoing alkali activation treatment includes: mixing the carbon matrix with an alkali and reacting at 650°C to 850°C for 2 h to 4 h to obtain a first material. In this way, a suitable pore structure may be obtained, providing a basis for subsequent mesopore formation and micropore formation, and is conducive to obtaining the final porous carbon with a well-developed pore structure. For example, a reaction temperature during the alkali activation treatment may be, but is not limited to, 650°C, 675°C, 700°C, 725°C, 750°C, 775°C, 800°C, 825°C, 850°C, or the like. For example, reaction duration for the alkali activation treatment may be, but is not limited to, 2 h, 2.5 h, 3 h, 3.5 h, 4 h, or the like. In some specific examples, the alkali activation treatment further includes washing a material obtained after the alkali activation treatment to remove impurities generated during an alkali activation process. Specifically, the material may be washed with water, and the washing may be performed a plurality of times (for example, 3 times). Further, the foregoing washing includes acid washing, hot water washing, and distilled water washing that are performed sequentially to remove salts generated during reaction.

In some specific examples of the present disclosure, the foregoing alkali may include, but is not limited to, potassium hydroxide, sodium hydroxide, as well as acids or salts such as, but not limited to, phosphoric acid, potassium chloride, aluminum chloride, zinc chloride, and the like. Potassium hydroxide solution may be mixed with the carbon matrix, or solid potassium hydroxide may be directly blended with the carbon matrix for reaction. When the potassium hydroxide solution is used, there are no restrictions on concentration or pH value of the potassium hydroxide solution.

In some embodiments of the present disclosure, the steam activation treatment includes reacting the first material obtained from alkali activation at a temperature of 500°C to 800°C for 2 h to 4 h in a steam environment to obtain a second material. A suitable activation temperature allows steam to diffuse evenly within particles of the first material, thereby uniformly activating the entire first material particle and resulting in a mesoporous structure with a uniform pore distribution and an appropriate pore size distribution. For example, the temperature of the foregoing steam activation treatment may be, but is not limited to, 500°C, 525°C, 550°C, 575°C, 600°C, 625°C, 650°C, 675°C, 700°C, 725°C, 750°C, 775°C, 800°C, or the like. For example, duration of the steam activation treatment may be, but is not limited to, 2h, 2.5h, 3h, 3.5h, 4h, or the like.

In some embodiments of the present disclosure, the carbon dioxide treatment includes: placing the second material obtained after the foregoing steam activation treatment in a carbon dioxide environment and reacting at a temperature of 800°C to 1200°C for 2 h to 4 h. In this way, a specific surface area of the finally obtained porous carbon may be optimized, and a microporous structure with an appropriate pore size distribution may be easily obtained, thereby obtaining a porous carbon material with a well-developed pore structure. For example, the temperature of the foregoing carbon dioxide treatment may be, but is not limited to, 800°C, 850°C, 900°C, 950°C, 1000°C, 1050°C, 1100°C, 1150°C, 1200°C, or the like.

In some other embodiments of the present disclosure, the activation treatment includes alkali activation treatment and mixed gas activation treatment, wherein the mixed gas includes steam and carbon dioxide.

In this example of the present disclosure, the carbon matrix may be directly purchased or obtained by carbonizing a precursor material. In some specific embodiments, the method further includes carbonizing the precursor material to obtain the carbon matrix, including:
carbonizing the precursor material at a temperature of 500°C to 1500°C for 2 h to 8 h in a protective atmosphere or a vacuum environment. For example, the carbonization temperature may be, but is not limited to, 500°C, 600°C, 700°C, 800°C, 900°C, 1000°C, 1100°C, 1200°C, 1300°C, 1400°C, 1500°C, or the like. For example, the carbonization duration may be, but is not limited to, 2 h, 3 h, 4 h, 5 h, 6 h, 7 h, 8 h, or the like.

The present disclosure does not limit a type of the precursor material, which may be selected from any known precursor material in the art. For example, the foregoing precursor material includes, but is not limited to, a biomass precursor, a polymer material precursor, coal char-based hard carbon, or the like. The biomass precursor includes, but is not limited to, coconut shell, bamboo, or starch; the polymer precursor includes resin, such as phenolic resin, epoxy resin, or the like; and the coal char includes, but is not limited to, anthracite, coking coal, or the like.

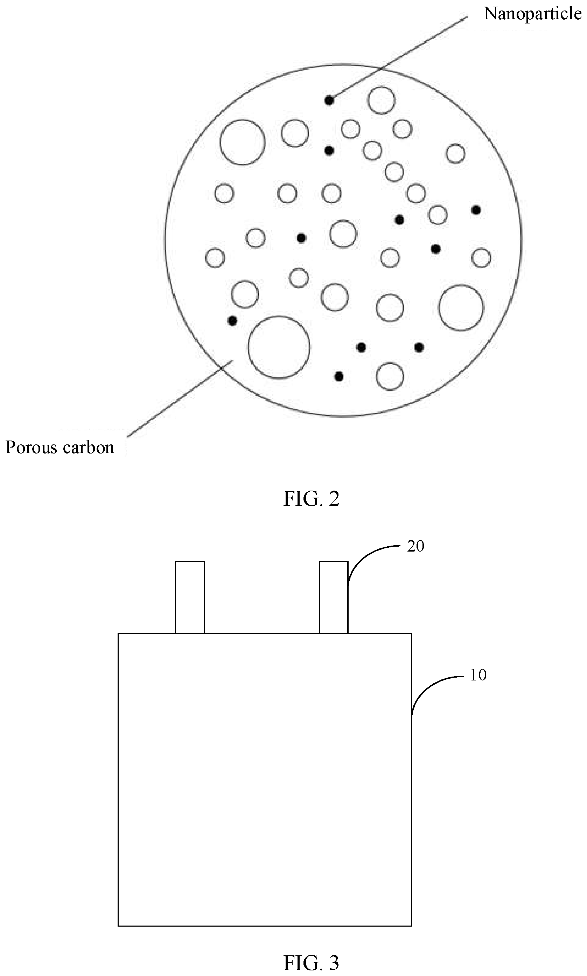

An example of the present disclosure provides a negative electrode active material including carbon-containing composite particles. FIG. 2 is a diagram of a structure of carbon-containing composite particles provided in an example of the present disclosure. The carbon-containing composite particles include the porous carbon provided in the examples of the present disclosure and nanoparticles located within the porous carbon. A material of the nanoparticles includes at least one of silicon, germanium, and tin. A pore volume of the porous carbon is 0.6 cm³/g to 1.2 cm³/g. Based on the total pore volume of the porous carbon, a volume proportion of pores with a pore size smaller than 2 nm is 70% to 95%, a volume proportion of pores with a pore size greater than or equal to 2 nm and smaller than or equal to 10 nm is 2% to 12%, a volume proportion of pores with a pore size greater than 10 nm and smaller than or equal to 50 nm is 1% to 18%, and a volume proportion of pores with a pore size greater than 50 nm is 0% to 23%.

Due to use of the porous carbon provided in the examples of the present disclosure as a substrate, the nanoparticles are uniformly distributed in the silicon-carbon particles, and particle size distribution of the nanoparticles is appropriate. Therefore, the problem of uneven stress distribution within the carbon-containing composite particles caused by differences in expansion volumes of the nanoparticles during charge and discharge cycles may be effectively reduced, thereby improving structural stability of the negative electrode active material during the charge and discharge cycles. The porous carbon features abundant pores and an appropriate pore size distribution, and the material of the deposited nanoparticles is less prone to accumulating on the surface of porous carbon particles. Additionally, a high compaction density may be achieved while ensuring integrity of the carbon-containing composite particles. In addition, based on high capacity of the nanoparticles and particular confinement effect of the porous carbon on the nanoparticles, the foregoing negative electrode active material may be used as the negative electrode active material with high capacity, low expansion rate, and good structural stability over long cycles.

In this example of the present disclosure, the negative electrode active material may be pretreated to remove the nanoparticles from the carbon-containing composite particles, and then the obtained porous carbon may be subjected to a gas adsorption-desorption test. A pretreatment method is as follows: A negative electrode active silicon-carbon material is dispersed in a saturated NaOH solution and magnetic stirring is performed at a room temperature with a speed of 180 rpm for 6 h. Then, the magnetically stirred solution is subjected to microwave digestion with a microwave power of 1000 W, a digestion temperature of 60°C, and a digestion time of 6 h to ensure complete reaction of the silicon material. The reacted material is then collected and washed three times with ultra-pure water.

In some embodiments of the present disclosure, the carbon-containing composite particles are silicon-carbon particles, and the material of the nanoparticles includes silicon. In this case, the material of the nanoparticles may be elemental silicon, or silicon oxides, silicon nitrides, or other materials.

In this example of the present disclosure, the material of the nanoparticles may be crystalline or amorphous. This is not limited in the present disclosure.

In some embodiments of the present disclosure, in the silicon-carbon particles, a mass proportion of silicon in the silicon-carbon particles is 40 w.t.% to 50 w.t.%. However, controlling a ratio of the two within the above range allows the negative electrode active material to exhibit high capacity and low expansion rate and structural stability during charge and discharge cycles. In this example of the present disclosure, a nitrogen-oxygen analyzer may be used to test nitrogen content and oxygen content, a carbon-sulfur analyzer may be used to test carbon content, and silicon content in the negative electrode active material may be tested using a method of silicon content = 1 - nitrogen content - oxygen content - carbon content.

In some embodiments of the present disclosure, a mass proportion of carbon in the negative electrode active material is 50% to 60%. For example, the mass proportion of carbon in the negative electrode active material may be, but is not limited to, 50%, 52%, 54%, 56%, 58%, 60%, or the like. In this example of the present disclosure, the carbon content in the negative electrode active material may be tested by oxidizing the negative electrode active material with oxygen at high temperature in a combustion furnace. The oxidation of carbon produces carbon dioxide, and the carbon content is measured by using a carbon-sulfur analyzer.

In some embodiments of the present disclosure, the material of the nanoparticles in the silicon-carbon particles includes elemental silicon. A passivation region is formed in a thickness region extending 5 nm to 20 nm from a surface layer to a center of the silicon-carbon particles, and the passivation region includes silicon dioxide. In some specific examples, within the silicon-carbon particles, a nano-silicon-containing material in a region other than the passivation region is elemental silicon.

In some embodiments of the present disclosure, the negative electrode active material further includes a coating layer disposed on a surface of the carbon-containing composite particles, and a material of the coating layer includes conductive carbon and/or a fast ion conductor material. The coating layer may effectively isolate the carbon-containing composite particles from side reactions with electrolyte or a solvent used during a slurry preparation process, facilitating capacity performance of the negative electrode active material. In addition, the coating layer may suppress expansion of the carbon-containing composite particles, further reducing a volume change rate of the carbon-containing composite particles during charge and discharge cycles. In addition, the conductive carbon may improve electronic conductivity of the negative electrode active material, and the fast ion conductor may improve ionic conductivity of the negative electrode active material, both of which are beneficial to improving rate performance of the negative electrode active material. In this example of the present disclosure, the coating layer may be a conductive carbon layer, a fast ion conductor material layer, or a composite layer of the conductive carbon and the fast ion conductor.

In some specific examples, a thickness of the coating layer is 10 nm to 50 nm. Controlling the thickness of the coating layer within the above range allows a length of an insertion/extraction path of active ions to be controlled within a suitable range, sufficiently improving the electronic conductivity and/or the ionic conductivity of the negative electrode active material. For example, the thickness of the coating layer may be, but is not limited to, 10 nm, 15 nm, 20 nm, 25 nm, 30 nm, 35 nm, 40 nm, 45 nm, 50 nm, or the like.

An example of the present disclosure further provides a preparation method of a negative electrode active material, including:
S01: deposit nanoparticles in the porous carbon provided in examples of the present disclosure to obtain the negative electrode active material provided in this example of the present disclosure, wherein based on a total pore volume of the porous carbon, a volume proportion of pores with a pore size smaller than 2 nm is 70% to 95%, a volume proportion of pores with a pore size greater than or equal to 2 nm and smaller than or equal to 10 nm is 2% to 12%, a volume proportion of pores with a pore size greater than 10 nm and smaller than or equal to 50 nm is 1% to 18%, and a volume proportion of pores with a pore size greater than 50 nm is 0% to 23%.

The above preparation method has high process controllability and high production efficiency, and is suitable for large-scale industrial production.

In some embodiments of the present disclosure, the carbon-containing composite particles are silicon-carbon particles, and a material of the nanoparticles includes silicon. Depositing the nanoparticles in the porous carbon includes:
The porous carbon is placed in a reaction chamber, a silicon source is introduced, and deposition is carried out at a temperature of 400°C to 600°C for 2 h to 6 h, to obtain the negative electrode active material. In this example of the present disclosure, the reaction chamber may be, but is not limited to, a fluidized bed. For example, the deposition temperature may be, but is not limited to, 400°C, 450°C, 500°C, 550°C, 600°C, or the like. For example, the deposition time may be, but is not limited to, 2 h, 2.5 h, 3 h, 3.5 h, 4 h, 4.5 h, 5 h, 5.5 h, 6 h, or the like. In some embodiments of the present disclosure, the silicon source is silane. In this case, the nano-silicon-containing material obtained through deposition is elemental silicon.

In some embodiments of the present disclosure, the silicon source includes silane, and the nanoparticles obtained through deposition include elemental silicon.

When the nanoparticles include the elemental silicon, to avoid the exothermic oxidation and combustion of the elemental silicon caused by sudden exposure of the freshly prepared nanoparticles with air, some specific examples further include step S02: perform oxidation passivation treatment on a post-deposition material, wherein the passivation treatment includes exposing the post-deposition material to a dilute oxygen atmosphere (oxygen/nitrogen mixed gas with a volume content of 2% to 4%) at a temperature of 200°C to 500°C for 2 h to 4 h, oxidizing nano-elemental silicon nanoparticles on a surface layer of the silicon-carbon particles. In this way, in the prepared silicon-carbon particles in some embodiments of the present disclosure, a passivation region is formed in a thickness region extending 5 nm to 20 nm from a surface layer to a center of the silicon-carbon particles, and the nano-silicon-containing material in the passivation region includes silicon dioxide. In some specific examples, within the silicon-carbon particles, a nano-silicon-containing material in a region other than the passivation region is elemental silicon.

In some embodiments of the present disclosure, the preparation method further includes: performing coating treatment on the prepared carbon-containing composite particles. A carbon coating layer may be formed on a surface of the carbon-containing composite particles by using a vapor deposition method. In some specific examples, at least one of methane, ethylene, acetylene, and ethane may be introduced and reacted at a temperature of 500°C to 800°C for 2 h to 6 h, to obtain the carbon-containing composite particles with the carbon coating layer.

In some other specific examples, a coating layer may alternatively be formed on a surface of the carbon-containing composite particles by using a solid-state method. Specifically, the carbon-containing composite particles may be placed in a solid-phase mixing apparatus (for example, a ball mill) containing a conductive material and/or a fast ion conductor material, and mixed to form the coating layer on the surface of the carbon-containing composite particles.

In some embodiments of the present disclosure, when the material of the deposited nanoparticles includes the elemental silicon, oxidation passivation treatment may first be performed on the material obtained in step S01, and then coating treatment may be performed on the silicon-carbon particles after the oxidation passivation treatment. In this case, the negative electrode active material includes silicon-carbon particles and a coating layer covering a surface of the silicon-carbon particles. A passivation region is formed in a thickness region extending 5 nm to 20 nm from a surface layer to a center of the silicon-carbon particles, and the nano-silicon-containing material in the passivation region includes silicon dioxide. In some other specific examples, the coating treatment is directly performed on the silicon-carbon particles obtained in step S01.

An example of the present disclosure further provides a negative electrode 20, including the negative electrode active material provided in the example of the present disclosure. Due to use of the negative electrode active material provided in the example of the present disclosure, the negative electrode 20 may be used to provide a battery with high capacity, excellent cycle performance, and low expansion rate.

In some embodiments of the present disclosure, the negative electrode 20 includes a negative electrode current collector and a negative electrode active material layer disposed on at least one side surface of the negative electrode current collector, wherein the negative electrode active material layer includes the foregoing negative electrode active material and a binder. In some specific examples, the foregoing negative electrode material layer further includes a conductive agent. In this example of the present disclosure, the negative electrode current collector may be any current collector known in the art and applicable to the negative electrode 20. For example, the current collector may be, but is not limited to, aluminum foil, carbon-coated aluminum foil, or the like.

In this example of the present disclosure, the binder may be any binder known in the art and applicable to the negative electrode 20. For example, the binder includes, but is not limited to, styrene-butadiene rubber (SBR) or the like.

In this example of the present disclosure, the conductive agent may be any conductive agent known in the art. For example, the conductive agent includes, but is not limited to, at least one of super p, acetylene black, graphene, and carbon nanotubes.

An example of the present disclosure further provides an electrochemical apparatus 10, including the negative electrode 20 provided in the examples of the present disclosure. FIG. 3 is a diagram of a structure of an electrochemical apparatus provided in an example of the present disclosure. Due to inclusion of the negative electrode 20 provided in the example of the present disclosure, the electrochemical apparatus 10 may achieve high capacity, excellent cycling performance, and low expansion rate.

In some embodiments of the present disclosure, the electrochemical apparatus 10 is a secondary battery. The secondary battery may be a lithium-ion battery or an alkali metal-ion battery such as a sodium-ion battery. The secondary battery may be a liquid-state battery using a liquid electrolyte, a solid-state battery using a solid electrolyte, or a semi-solid-state battery.

In some embodiments of the present disclosure, the secondary battery includes a cathode, the negative electrode 20, and an electrolyte and a separator disposed between the cathode and the negative electrode 20.

In this example of the present disclosure, the cathode may be any cathode known in the art.

In some embodiments of the present disclosure, the electrochemical apparatus 10 is a supercapacitor. In some specific examples, the supercapacitor includes a cathode, the negative electrode 20, and an electrolyte disposed between the cathode and negative electrode 20.

In this example of the present disclosure, the cathode in the supercapacitor may be any cathode known in the art, and the electrolyte may be any electrolyte known in the art, provided that they are compatible with each other.

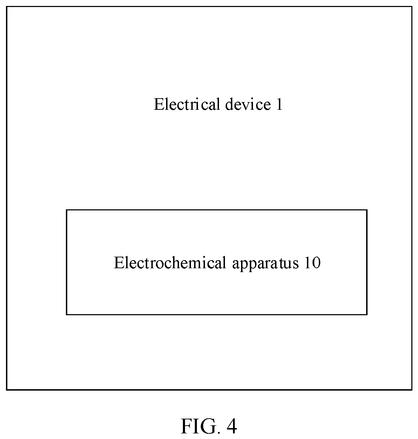

An example of the present disclosure further provides an electrical device 1, including the electrochemical apparatus 10 provided. FIG. 4 is a block diagram of a structure of an electrical device provided in an example of the present disclosure. The electrical device 1 has a promising market prospect due to the electrochemical apparatus 10 provided in the example of the present disclosure.

In some embodiments of the present disclosure, the electrical device 1 includes, but is not limited to, a vehicle, a consumer electronic product, or the like. The vehicle includes, but is not limited to, a new energy vehicle, an electric bicycle, or the like.

The following further describes the technical solutions of the present disclosure in a plurality of examples.

### Example 1

Preparation of a porous carbon:
(1) A precursor material (specifically, phenolic resin) is placed in a vacuum tube furnace for vacuum high-temperature carbonization treatment to obtain a carbon matrix. A carbonization temperature is 1000°C and duration is 5 h.
(2) The carbon matrix is uniformly mixed with KOH and subjected to alkali activation treatment at a temperature of 750°C for 2 h. A material obtained after the alkali activation treatment is washed with ultrapure water three times to obtain a first material.
(3) The first material is subjected to steam activation at a temperature of 700°C for 2 h to obtain a second material.
(4) The second material is subjected to carbon dioxide activation at a temperature of 1000°C for 2 h to obtain the porous carbon.

Preparation of a negative electrode active material:
(1) The porous carbon is placed in a fluidized bed, silane gas is introduced and deposited at a temperature of 500°C for 4 h.
(2) A material obtained after the deposition treatment is still placed in the fluidized bed, and dilute oxygen with an oxygen volume content of 2% to 4% is introduced to perform oxidation passivation treatment at a temperature of 500°C for 2 h, to obtain oxygen-passivated silicon-carbon particles without carbon coating.
(3) The silicon-carbon particles are subjected to vapor-phase coating in a rotary tube furnace with acetylene as a carbon source to obtain a negative electrode material. A coating temperature is 650°C and a coating time is 4 h. A thickness of a carbon coating layer obtained through vapor-phase coating is 10 nm.

### Example 2

The only difference from Example 1 is that in step (2), the temperature of the alkali activation treatment is 830°C.

### Example 3

The only difference from Example 1 is that in step (2), the temperature of the alkali activation treatment is 660°C.

### Example 4

The only difference from Example 1 is that in step (3), the temperature of steam activation is 780°C.

### Example 5

The only difference from Example 1 is that in step (3), the temperature of steam activation is 610°C.

### Example 6

The only difference from Example 1 is that in step (4), the temperature of carbon dioxide activation is 1180°C.

### Example 7

The only difference from Example 1 is that in step (4), the temperature of carbon dioxide activation is 900°C.

### Example 8

(1) The porous carbon is prepared by using the method in Example 1. The porous carbon is placed in a fluidized bed, silane gas is introduced and deposited at a temperature of 500°C for 4 h to obtain silicon-carbon particles without carbon coating.
(2) A material obtained after the deposition treatment is still placed in the fluidized bed, and a carbon source is introduced for vapor phase coating to obtain a negative electrode material. A carbon source is acetylene, a coating temperature is 650°C and a coating time is 4 h. A thickness of a carbon coating layer obtained through vapor-phase coating is 10 nm.

### Example 9

(1) A precursor material (specifically, phenolic resin) is placed in a vacuum tube furnace for vacuum high-temperature carbonization treatment to obtain a carbon matrix. A carbonization temperature is 1000°C and duration is 5 h.
(2) The carbon matrix is uniformly mixed with KOH and subjected to alkali activation treatment at a temperature of 850°C for 4 h. A material obtained after the alkali activation treatment is washed with ultrapure water three times to obtain a first material.
(3) The first material is subjected to steam activation at a temperature of 550°C for 2 h to obtain a second material.
(4) The second material is subjected to carbon dioxide activation at a temperature of 850°C for 2 h to obtain the porous carbon.

To highlight beneficial effects of the examples of the present disclosure, the following comparative examples are provided.

### Comparative Example 1

The only difference from Example 1 is that in step (2), the temperature of the alkali activation treatment is 900°C.

### Comparative Example 2

The only difference from Example 1 is that in step (2), the temperature of the alkali activation treatment is 600°C.

### Comparative Example 3

The only difference from Example 1 is that in step (3), the temperature of steam activation is 860°C.

### Comparative Example 4

The only difference from Example 1 is that in step (3), the temperature of steam activation is 450°C.

### Comparative Example 5

The only difference from Example 1 is that in step (4), the temperature of carbon dioxide activation is 1300°C.

### Comparative Example 6

The only difference from Example 1 is that in step (4), the temperature of carbon dioxide activation is 750°C.

### Comparative Example 7

The difference from Example 1 is that the carbonization temperature and time of the precursor material, as well as the temperature and time of each step in the activation process, are adjusted to adjust the parameters of the porous carbon to the values shown in Table 1.

### Comparative Example 8

The difference from Example 1 is that the carbonization temperature and time of the precursor material, as well as the temperature and time of each step in the activation process, are adjusted to adjust the parameters of the porous carbon to the values shown in Table 1.

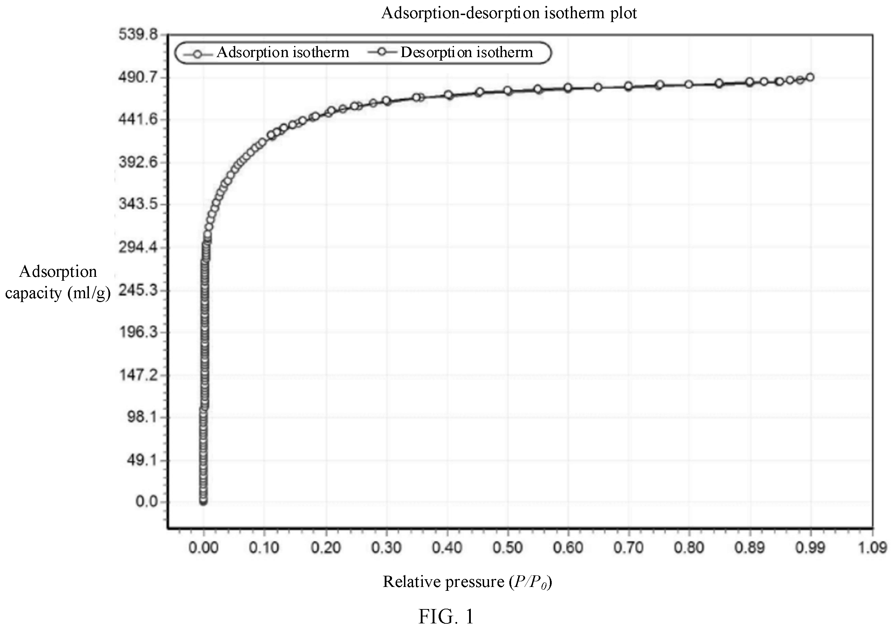

Gas adsorption tests are performed on the porous carbon obtained in the examples and the comparative examples to obtain a total pore volume (pore volume), a pore size distribution, an average pore size, and a specific surface area per unit mass of the porous carbon. The results are summarized in Table 1. Specifically, the total pore volume is tested by using the method specified in GB/T 7702.20-2008 "Test method for granular activated carbon from coal -- Determination of pore volume and specific surface area", the pore size distribution and the average pore size are tested by using the method specified in GB/T 21650.3-2011 "Pore size distribution and porosity of solid materials by mercury porosimetry and gas adsorption", and the specific surface area is tested by using the method specified in GB/T 19587-2017 "Determination of the specific surface area of solids by gas adsorption using the BET method". Analyses on the pore volume, the pore size distribution, and the average pore size are performed by using a BJH (Barrett-Joyner-Halenda) model, while analysis on the specific surface area is performed by using a BET (Brunauer-Emmett-Teller) model. FIG. 1 shows an adsorption-desorption isotherm curve of the porous carbon in Example 1 measured under the above conditions.

**Table 1**

| Cases | Volume proportions of pores with various pore sizes in the porous carbon | | | | | Pore volume (cm³/g) | Average pore size / nm | Specific surface area (m²/g) |
|---|---|---|---|---|---|---|---|---|
| | Pore size < 2 nm | 2 nm ≤ pore size ≤ 10 nm | 10 nm < pore size ≤ 30 nm | 30 nm < pore size ≤ 50 nm | Pore size > 50 nm | | | |
| Example 1 | 86% | 5% | 4% | 3% | 2% | 0.85 | 1.65 | 1850 |
| Example 2 | 72% | 9% | 8% | 7% | 4% | 0.66 | 2.32 | 1630 |
| Example 3 | 74% | 8% | 9% | 8% | 1% | 0.73 | 2.22 | 1720 |
| Example 4 | 78% | 8% | 8% | 4% | 2% | 0.96 | 2.32 | 1530 |
| Example 5 | 77% | 7% | 6% | 6% | 4% | 0.89 | 2.03 | 1660 |
| Example 6 | 94% | 3% | 2% | 1% | 0% | 0.83 | 1.61 | 2010 |
| Example 7 | 77% | 11% | 6% | 4% | 2% | 0.94 | 1.84 | 1680 |
| Example 9 | 73% | 7% | 6% | 5% | 9% | 1.16 | 2.17 | 1760 |
| Comparative Example 1 | 58% | 15% | 12% | 9% | 6% | 0.49 | 2.91 | 1230 |
| Comparative Example 2 | 69% | 15% | 8% | 7% | 1% | 0.54 | 2.76 | 1360 |
| Comparative Example 3 | 68% | 13% | 12% | 6% | 1% | 1.23 | 2.67 | 1380 |
| Comparative Example 4 | 67% | 10% | 9% | 9% | 5% | 1.09 | 2.62 | 1410 |
| Comparative Example 5 | 96% | 1% | 1% | 1% | 1% | 0.59 | 0.94 | 2410 |
| Comparative Example 6 | 66% | 13% | 9% | 7% | 5% | 1.25 | 2.05 | 1530 |
| Comparative Example 7 | 80% | 20% | 0% | 0% | 0% | 0.82 | 1.87 | 1710 |
| Comparative Example 8 | 94% | 1% | 2% | 1% | 1% | 0.72 | 1.71 | 1744 |

### Carbon content and silicon content test:

The negative electrode active material prepared in the foregoing examples and comparative examples is tested for nitrogen content and oxygen content by using a nitrogen-oxygen analyzer, as well as carbon content by using a carbon-sulfur analyzer. The silicon content is calculated as 1 - nitrogen content - oxygen content - carbon content, thereby determining the silicon content in the negative electrode active material. Nitrogen is an impurity from the precursor, with nitrogen content less than 0.1 w.t.%, which may be basically ignored. Therefore, Table 2 only summarizes the contents of carbon, oxygen, and silicon.

**Table 2**

| Cases | Carbon content (w.t.%) | Oxygen content (w.t.%) | Silicon content (w.t.%) |
|---|---|---|---|
| Example 1 | 51.94 | 1.24 | 46.82 |
| Example 2 | 56.36 | 1.37 | 42.27 |
| Example 3 | 55.59 | 1.19 | 43.22 |
| Example 4 | 50.63 | 1.26 | 48.11 |
| Example 5 | 50.41 | 1.33 | 48.26 |
| Example 6 | 51.82 | 1.31 | 46.87 |
| Example 7 | 50.50 | 1.42 | 48.08 |
| Example 8 | 51.97 | 0.03 | 48.00 |
| Example 9 | 47.14 | 1.35 | 51.51 |
| Comparative Example 1 | 59.02 | 1.31 | 39.67 |
| Comparative Example 2 | 58.19 | 1.52 | 40.29 |
| Comparative Example 3 | 47.06 | 1.48 | 51.46 |
| Comparative Example 4 | 49.17 | 1.28 | 49.55 |
| Comparative Example 5 | 58.26 | 1.42 | 40.32 |
| Comparative Example 6 | 46.08 | 1.33 | 52.59 |
| Comparative Example 7 | 52.45 | 1.24 | 46.31 |
| Comparative Example 8 | 51.87 | 1.47 | 46.66 |

### Powder conductivity test:

2 g of a powder material of the negative electrode active material prepared in the foregoing examples and comparative examples is taken and placed in a fixture cavity of a powder resistance analyzer, and tested by using a four-probe method. A test pressure is 10 MPa and a holding time is 20 s. The results are summarized in Table 3.

### Gas generation test of slurry:

The negative electrode active material prepared in the foregoing examples and comparative examples is mixed with a conductive agent (specifically, acetylene black), a binder (specifically, polyacrylic acid, PAA), and a solvent (specifically, water) in a mass ratio of 8:1:1:10 to obtain a slurry. 50 g of the slurry is sealed in an aluminum-plastic film bag with dimensions of 10 cm * 10 cm. A volume of the aluminum-plastic film bag is measured by using a water displacement method, and an initial volume is recorded. After storing the aluminum-plastic film bag at 45°C for 48 h, a volume (final volume) of the aluminum-plastic film bag is measured again by using the water displacement method. A gas generation volume increase (ml/g) is calculated as (final volume - initial volume)/mass of the negative electrode active material. The results are summarized in Table 3.

**Table 3**

| Cases | Powder conductivity (S/cm) | Gas production of slurry after 48 h (mL/g) |
|---|---|---|
| Example 1 | 0.318 | 0.07 |
| Example 2 | 0.161 | 0.22 |
| Example 3 | 0.184 | 0.25 |
| Example 4 | 0.159 | 0.47 |
| Example 5 | 0.378 | 0.38 |
| Example 6 | 0.296 | 0.11 |
| Example 7 | 0.253 | 0.24 |
| Example 8 | 0.367 | 0.93 |
| Example 9 | 0.226 | 0.21 |
| Comparative Example 1 | 0.002 | 1.83 |
| Comparative Example 2 | 0.026 | 1.58 |
| Comparative Example 3 | 0.047 | 1.73 |
| Comparative Example 4 | 0.034 | 1.55 |
| Comparative Example 5 | 0.117 | 0.98 |
| Comparative Example 6 | 0.094 | 0.69 |
| Comparative Example 7 | 0.118 | 0.68 |
| Comparative Example 8 | 0.175 | 0.58 |

### Pressure resistance test of powder particles:

5 g of samples of the silicon-carbon particles without carbon coating obtained after silicon deposition in the examples and the comparative examples are taken and subjected to pressure compaction testing. Test pressures are 10 MPa, 30 MPa, 60 MPa, and 90 MPa, respectively, and a holding time is 5 min. The samples after the pressure test are collected for specific surface area testing (the specific surface area is tested according to GB/T 19587-2017 "Determination of the specific surface area of solids by gas adsorption using the BET method"). Data on the specific surface area in the examples and comparative examples under different test pressures are summarized in Table 4.

The changes in the specific surface area with increasing pressure are compared. A greater change in the specific surface area indicates lower particle compaction resistance and poorer pressure resistance. The increased specific surface area is due to pores exposed after the material is crushed.

**Table 4**

| Cases | 0 MPa (no pressure) | 10 MPa | 30 MPa | 60 MPa | 90 MPa |
|---|---|---|---|---|---|
| Example 1 | 8.9 m²/g | 9.5 m²/g | 10.8 m²/g | 12.7 m²/g | 26.9 m²/g |
| Example 2 | 9.2 m²/g | 12.7 m²/g | 17.3 m²/g | 25.1 m²/g | 62.7 m²/g |
| Example 3 | 8.6 m²/g | 11.3 m²/g | 14.8 m²/g | 20.8 m²/g | 47.8 m²/g |
| Example 4 | 8.7 m²/g | 11.3 m²/g | 15.8 m²/g | 19.4 m²/g | 43.8 m²/g |
| Example 5 | 9.3 m²/g | 12.5 m²/g | 16.7 m²/g | 23.4 m²/g | 49.3 m²/g |
| Example 6 | 8.8 m²/g | 11.1 m²/g | 13.4 m²/g | 16.7 m²/g | 35.8 m²/g |
| Example 7 | 8.9 m²/g | 11.7 m²/g | 14.9 m²/g | 18.3 m²/g | 41.8 m²/g |
| Example 8 | 9.2 m²/g | 10.7 m²/g | 12.8 m²/g | 15.1 m²/g | 30.5 m²/g |
| Example 9 | 9.1 m²/g | 15.3 m²/g | 21.2 m²/g | 27.7 m²/g | 59.4 m²/g |
| Comparative Example 1 | 8.5 m²/g | 15.3 m²/g | 28.3 m²/g | 58.3 m²/g | 125.8 m²/g |
| Comparative Example 2 | 9.0 m²/g | 15.2 m²/g | 26.8 m²/g | 52.3 m²/g | 112.4 m²/g |
| Comparative Example 3 | 9.2 m²/g | 16.1 m²/g | 24.7 m²/g | 49.7 m²/g | 116.8 m²/g |
| Comparative Example 4 | 9.1 m²/g | 16.8 m²/g | 26.3 m²/g | 54.7 m²/g | 124.5 m²/g |
| Comparative Example 5 | 8.5 m²/g | 13.8 m²/g | 22.6 m²/g | 38.9 m²/g | 82.4 m²/g |
| Comparative Example 6 | 8.7 m²/g | 15.8 m²/g | 25.3 m²/g | 53.8 m²/g | 127.4 m²/g |
| Comparative Example 7 | 8.9 m²/g | 17.7 m²/g | 26.8 m²/g | 47.2 m²/g | 86.3 m²/g |
| Comparative Example 8 | 9.0 m²/g | 12.8 m²/g | 19.5 m²/g | 35.2 m²/g | 68.4 m²/g |

### Electrochemical performance test:

① The negative electrode active material prepared in the foregoing examples and comparative examples is added to a solvent (specifically, water) along with a conductive agent (specifically, acetylene black) and a binder (specifically, polyacrylic acid, PAA) in a mass ratio of 8:1:1. After thorough mixing, the slurry is coated onto copper foil, dried, rolled, and slit to obtain the negative electrode in the examples and comparative examples.
② Lithium metal foil is used as a counter electrode, and a polyethylene/polypropylene composite membrane is used as a separator. The counter electrode, separator, and working electrode are stacked, electrolyte is injected, and a button cell is fabricated. The electrolyte is a lithium salt (specifically, lithium hexafluorophosphate LiPF6) solution with a concentration of 1 mol/L, with a solvent composition of EC:EMC:DMC:DEC:FEC in a mass ratio of 23:25:24:28:15. EC means ethylene carbonate, EMC means ethyl methyl carbonate, DMC means dimethyl carbonate, DEC means diethyl carbonate, and FEC means fluoroethylene carbonate.
③ Initial coulombic efficiency test: The button cell obtained in the examples and comparative examples is discharged at a constant current of 0.01 C to 0.005 V at 25 ± 2°C, and then charged at a constant current of 0.1 C to 1.5 V. An initial discharge capacity and an initial charge capacity of the button cell are recorded. The initial coulombic efficiency is calculated as initial constant current charge capacity/initial constant current discharge capacity. The results are summarized in Table 5.
④ Initial expansion rate test: Before assembling the button cell, an original thickness of the negative electrode sheet in the examples and comparative examples is measured with a micrometer. The button cell is assembled based on the foregoing parameters and charged to 100% SOC (state of charge). The button cell is disassembled, the negative electrode sheet is removed, cleaned with dichloromethane (DCM), dried, and a thickness of the button cell is measured again. The initial expansion rate is calculated as [(thickness of the negative electrode sheet at 100% SOC - thickness of copper foil) - (original thickness of the negative electrode sheet - thickness of copper foil)]/(original thickness of the negative electrode sheet - thickness of copper foil) × 100%. The results are summarized in Table 5.
⑤ The negative electrode in the examples and comparative examples is stacked with a ternary cathode or a lithium iron phosphate cathode to assemble a pouch battery. The pouch battery is subjected to charge and discharge cycle tests at 25±2°C. Specifically, the pouch battery is charged at a constant current of 0.33 C to 3.8 V, charged at a constant voltage to 0.05 C, left to rest for 10 min, and discharged at a constant current of 0.33 C to 2.0 V, completing one cycle. Repeat the step to test the capacity and capacity retention of the cell after 100 cycles. The results are summarized in Table 5.

**Table 5**

| Cases | Initial coulombic efficiency | Initial expansion rate | Initial discharge capacity (mAh) | 100-cycle discharge capacity (mAh) | 100-cycle capacity retention |
|---|---|---|---|---|---|
| Example 1 | 90.37% | 31.52% | 1819 | 1354 | 74.42% |
| Example 2 | 88.65% | 35.61% | 1769 | 1212 | 68.49% |
| Example 3 | 88.13% | 35.27% | 1767 | 1220 | 69.06% |
| Example 4 | 87.84% | 36.96% | 1758 | 1196 | 68.04% |
| Example 5 | 87.95% | 36.41% | 1761 | 1219 | 69.25% |
| Example 6 | 89.01% | 32.74% | 1782 | 1257 | 70.55% |
| Example 7 | 88.96% | 34.32% | 1782 | 1262 | 70.83% |
| Example 8 | 87.86% | 45.27% | 1759 | 1114 | 63.35% |
| Example 9 | 87.36% | 39.42% | 1737 | 1180 | 67.91% |
| Comparative Example 1 | 82.68% | 58.42% | 1655 | 770 | 46.51% |
| Comparative Example 2 | 83.58% | 53.94% | 1673 | 877 | 52.41% |
| Comparative Example 3 | 82.87% | 55.84% | 1657 | 799 | 48.22% |
| Comparative Example 4 | 83.72% | 54.17% | 1672 | 870 | 52.03% |
| Comparative Example 5 | 85.93% | 44.94% | 1721 | 1033 | 60.03% |
| Comparative Example 6 | 86.85% | 41.65% | 1736 | 1109 | 63.86% |
| Comparative Example 7 | 85.65% | 40.57% | 1723 | 1077 | 62.53% |
| Comparative Example 8 | 86.83% | 39.83% | 1774 | 1121 | 63.21% |

Based on the data in Table 1 to Table 5, it may be learned that the porous carbon provided in the examples of the present disclosure is used as a matrix to further deposit silane. The resulting negative electrode active material may achieve a high compaction density while exhibiting a low powder resistivity, a low expansion rate, a high initial discharge capacity, and excellent cycling performance.

The foregoing descriptions are example embodiments of the present disclosure. It will be noted that a person of ordinary skill in the art may further make several improvements and refinements on the present disclosure without departing from the principles of the present disclosure. These improvements and refinements also fall within the protection scope of the present disclosure.

## Claims

1. A porous carbon, wherein a pore volume of the porous carbon is 0.6 cm³/g to 1.2 cm³/g; and
based on the total pore volume of the porous carbon, a volume proportion of pores with a pore size smaller than 2 nm is 70% to 95%, a volume proportion of pores with a pore size greater than or equal to 2 nm and smaller than or equal to 10 nm is 2% to 12%, a volume proportion of pores with a pore size greater than 10 nm and smaller than or equal to 50 nm is 1% to 18%, and a volume proportion of pores with a pore size greater than 50 nm is 0% to 23%.

2. The porous carbon according to claim 1, wherein a volume proportion of pores with a pore size greater than 10 nm and smaller than or equal to 30 nm is 2% to 10%, and a volume proportion of pores with a pore size greater than 30 nm and smaller than or equal to 50 nm is 1% to 8%.

3. The porous carbon according to claim 1 or 2, wherein based on the total pore volume of the porous carbon, the volume proportion of the pores with the pore size greater than 50 nm is 0% to 4%.

4. The porous carbon according to any one of claims 1 to 3, wherein a specific surface area of the porous carbon is 1400 m²/g to 2400 m²/g.

5. The porous carbon according to any one of claims 1 to 4, wherein an average pore size of the porous carbon is 0.8 nm to 2.6 nm.

6. The porous carbon according to any one of claims 1 to 5, wherein the porous carbon comprises amorphous carbon.

7. A preparation method of the porous carbon according to any one of claims 1 to 6, comprising:
performing activation treatment on a carbon matrix to obtain the porous carbon.

8. The preparation method according to claim 7, wherein the activation treatment comprises alkali activation treatment, steam activation treatment, and carbon dioxide activation treatment that are performed sequentially; or
the activation treatment comprises alkali activation treatment and mixed gas activation treatment, wherein the mixed gas comprises steam and carbon dioxide.

9. The preparation method according to claim 8, wherein the alkali activation treatment, the steam activation treatment, and the carbon dioxide activation treatment that are performed sequentially comprise:
mixing the carbon matrix with an alkali, reacting at 650°C to 850°C for 2 h to 4 h, and washing to obtain a first material;
reacting the first material in a steam environment at 500°C to 800°C for 2 h to 4 h to obtain a second material; and
reacting the second material in a carbon dioxide atmosphere at 800°C to 1200°C for 2 h to 4 h to obtain the porous carbon.

10. The preparation method according to any one of claims 7 to 9, wherein the carbon matrix is obtained by carbonizing one or more of biomass, resin, and coal char, wherein a carbonization temperature is 500°C to 1500°C, and carbonization duration is 2 h to 8 h.

11. A negative electrode active material, comprising carbon-containing composite particles, wherein the carbon-containing composite particles comprise the porous carbon according to any one of claims 1 to 6 and nanoparticles located within the porous carbon, and a material of the nanoparticles comprises at least one of silicon, germanium, and tin.

12. The negative electrode active material according to claim 11, wherein the carbon-containing composite particles are silicon-carbon particles, the material of the nanoparticles comprises elemental silicon, a passivation region is formed in a thickness region extending 5 nm to 20 nm from a surface layer to a center of the silicon-carbon particles, and the passivation region comprises silicon dioxide.

13. The negative electrode active material according to claim 11 or 12, wherein the negative electrode active material further comprises a coating layer disposed on a surface of the carbon-containing composite particles, and a material of the coating layer comprises conductive carbon and/or a fast ion conductor material; and
a thickness of the coating layer is 10 nm to 50 nm.

14. The negative electrode active material according to any one of claims 11 to 13, wherein the carbon-containing composite particles are silicon-carbon particles, the material of the nanoparticles comprises silicon, and a mass proportion of silicon in the silicon-carbon particles is 40 w.t.% to 50 w.t.%.

15. The negative electrode active material according to any one of claims 11 to 14, wherein a mass proportion of carbon in the carbon-containing composite particles is 50 w.t.% to 60 w.t.%.

16. A preparation method of a negative electrode active material, comprising: forming carbon-containing composite particles by depositing nanoparticles in the porous carbon according to any one of claims 1 to 6, to obtain the negative electrode active material; and a material of the nanoparticles comprises at least one of silicon, germanium, and tin.

17. The preparation method of the negative electrode active material according to claim 16, wherein the carbon-containing composite particles are silicon-carbon particles, the material of the nanoparticles comprises silicon, and depositing the nanoparticles in the porous carbon comprises: placing the porous carbon in a reaction chamber, introducing a silicon source, and depositing for 2 h to 6 h at a temperature of 400°C to 600°C, to obtain the negative electrode active material.

18. The preparation method of the negative electrode active material according to claim 17, wherein the silicon source comprises silane, and the nanoparticles obtained by deposition comprise elemental silicon.

19. The preparation method of the negative electrode active material according to claim 17 or 18, wherein the preparation method further comprises: performing oxidation passivation treatment on the porous carbon deposited with the nanoparticles.

20. The preparation method of the negative electrode active material according to claim 19, wherein the oxidation passivation treatment comprises: exposing the porous carbon deposited with the nanoparticles in a gas with an oxygen volume content of 2% to 4%, and performing passivation treatment for 2 h to 4 h at a temperature of 200°C to 500°C.

21. An electrochemical apparatus (10), wherein the electrochemical apparatus (10) comprises a negative electrode (20), and the negative electrode (20) comprises the negative electrode active material according to any one of claims 11 to 15, or the negative electrode active material prepared by the preparation method of the negative electrode active material according to any one of claims 16 to 20.

22. An electrical device (1), wherein the electrical device (1) comprises the electrochemical apparatus (10) according to claim 21.
